# EUROPÄISCHE PATENTSCHRIFT

(11) **EP 1 596 480 B1**
(45) Veröffentlichungstag und Bekanntmachung des Hinweises auf die Patenterteilung: **14.01.2009**
(21) Anmeldenummer: 05103185.4
(22) Anmeldetag: 20.04.2005
(51) Int. Cl.: H01R 25/00

(54) **Stromverteiler für einen Möbelantrieb**
Current distributor for furniture drive
Distributeur de courant pour entraînement pour meuble

(30) Priorität: 07.05.2004 DE 202004007563 U
(43) Veröffentlichungstag der Anmeldung: 16.11.2005
(73) Patentinhaber: Dewert Antriebs- und Systemtechnik GmbH, 32278 Kirchlengern (DE)
(72) Erfinder: Roither, Andreas, 32130 Enger (DE); Bünte, Mathias, 32108 Bad Salzuflen (DE); Haneball, Frank, 32839 Steinheim (DE); Toth, Laszlo, 32609 Hüllhorst (DE); Müller, Christian, 32839 Steinheim (DE)
(74) Vertreter: Dantz, Jan Henning

(56) Entgegenhaltungen:
- EP-A- 1 408 589
- WO-A-02/091539
- CH-A- 536 094
- DE-U1- 20 113 028
- GB-A- 2 249 223
- US-A- 3 956 575
- US-A- 4 135 171
- US-A- 4 271 545
- US-A- 4 672 234
- US-A- 5 199 893
- US-A1- 2003 129 869
- US-B1- 6 475 032

## Beschreibung

Die Erfindung betrifft eine Möbelantriebseinheit, mit einem Möbelantrieb, einem Stromverteiler, einem Handschalter und mindestens einem Stromverbraucher, wobei an den Stromverteiler ein zu einer Spannungsquelle führendes Stromzuführkabel und mindestens ein zu dem Stromverbraucher führendes Zuleitungskabel und ein zu dem Handschalter führendes Steuerkabel angeschlossen sind.

Die Möbelantriebe der Möbelantriebseinheiten werden üblicherweise mit einer Sicherheitskleinspannung betrieben. Sie sind häufig auch mit zwei Antriebsmotoren als Stromverbraucher ausgestattet. Beide Stromverbraucher werden jedoch mit einem einzigen Stromzuführkabel mit elektrischer Energie versorgt. Deshalb führt das Stromzuführkabel nicht direkt zu einer Steckdose sondern zu einem Transformator, dem ein Gleichrichter zugeordnet ist.

Es sind jedoch auch Antriebsanordnungen bekannt, bei denen bei einem Möbel jedem zu verstellenden Bauteil ein Antrieb zugeordnet ist. Derartige Antriebe werden als Einzelantriebe bezeichnet. Auch bei einer solchen Anordnung erfolgt die Stromzuführung durch ein einziges Stromzuführkabel. Auch die Steuerung der beiden Antriebe erfolgt von einem Handschalter aus.

Bei den bisher bekannten Stromverteilern der Möbelantriebseinheiten erfolgt die Festlegung der einzelnen Kabel durch sogenannte Kabelverschraubungen, die üblicherweise zweiteilig sind. Derartige Anordnungen haben sich zwar bestens bewährt, sind jedoch aufwendig und dementsprechend kostenintensiv, so dass die allgemein für Möbelantriebe geltende Forderung nach kostengünstigen Lösungen nicht erfüllt wird.

Dokument US4271545 beschreibt eine Möbelantriebseinheit nach der Präambel des Anspruchs 1.

Aus der US 4,672,234 wird ein Schaltersystem für elektrische Geräte beschrieben, die so installiert sind, dass sie nur unter Zuhilfenahme einer Leiter oder ähnlicher Gegenstände erreicht werden können. Diese Art der Montage wird in der Branche als Überkopfmontage bezeichnet. Solche elektrischen Geräte sind beispielsweise Überwachungsgeräte, Klimageräte und dergleichen. Dieses Schaltersystem enthält einen Stromverteiler, an dem eine zu einer Steckdose führende Leitung und eine zu dem Stromverbraucher führende Leitung angeschlossen sind. Ferner ist noch an den Stromverteiler ein zu einem Handschalter führendes Steuerkabel angeschlossen. Durch diesen Handschalter soll der Motor ein- und ausgeschaltet werden. Ein derartiges Schaltersystem bzw. der Stromverteiler ist für Möbelantriebe nicht geeignet. Die Motoren für Möbelantriebe werden mit einer Sicherheitsgleichspannung betrieben, so dass die Netzspannung mittels eines Transformators herabgesetzt und mittels eines Gleichrichters in eine Gleichspannung umgewandelt wird. Der Transformator und der Gleichrichter können dabei am Möbelantrieb oder innerhalb des Möbelantriebes montiert sein oder auch direkt in einem in die Steckdose eingeführtes Netzteil angeordnet sein. Darüber hinaus muss sichergestellt sein, dass zumindest das Steuerkabel vom Möbelantrieb getrennt werden kann.

Der Erfindung liegt die Aufgabe zugrunde, einen Stromverteiler für einen Möbelantrieb der Möbelantriebseinheit der eingangs näher beschriebenen Art so zu gestalten, dass die Anzahl der benötigten Bauteile so gering wie möglich gehalten wird und dass er kostengünstig herstellbar ist.

Die gestellte Aufgabe wird gelöst, indem der Stromverteiler als Verteilerblock ausgebildet ist und dass das Stromzuführkabel und jedes Zuleitungskabel durch eine gegossene und/oder umspritzte sowie ausgehärtete Masse im Verteilerblock festgelegt sind, und dass der Stromverteiler eine Steckerbuchse aufweist, in die der Stecker des Steuerkabels einsteckbar ist.

Der grundlegende Gedanke zur Schaffung des Stromverteilers ist in dem Vergießen oder dem Umspritzen mittels einer aushärtbaren Masse zu sehen. Dadurch können Kabelverschraubungen oder ähnliche Bauteile entfallen, so dass auch deren Montage entfällt. Außerdem kann der Stromverteiler so ausgelegt werden, dass unabhängig von der Anzahl der Zuleitungskabel stets der gleiche Grundbaustein verwendet werden kann.

Da die Funktion des Möbelantriebes nicht beeinträchtigt werden darf, ist vorgesehen, dass der Stromverteiler mindestens eine Steckerbuchse aufweist, in die der Stecker des Steuerkabels einsteckbar ist. Dadurch wird auch ein Auswechseln des Handschalters möglich. Das Vergießen mit der aushärtbaren Masse wird besonders einfach, wenn das Stromzuführkabel und jedes Zuleitungskabel in einer Reihe nebeneinander angeordnet sind. Außerdem werden die Abmessungen des Stromverteilers so gering wie möglich gehalten.

Der Grundbaustein für das Vergießen oder Umspritzen mit der aushärtbaren Masse ist ein offenes Gehäuse, welches an der Seite des Stromzuführkabels und der Zuleitungskabel offen ist, so dass der Innenraum dieses Gehäuses mit der Masse vergossen werden kann. Fertigungstechnisch ist es besonders vorteilhaft, wenn das Gehäuse des Verteilerblocks im Spritzgussverfahren hergestellt ist und dass im Inneren des Gehäuses miteinander elektrisch verbundene Kabel und Kontakte der Steckerbuchse mit einem Kunststoff umspritzt sind. Um die für die Stromverteilung günstigen Voraussetzungen zu schaffen, ist vorgesehen, dass die Steckerbuchse im rechten Winkel zu den Zuleitungskabeln und dem Stromzuführkabel steht. Die Kontaktbuchsen der Steckerbuchse verlaufen dann ebenfalls rechtwinklig zu den Zuleitungskabeln. Durch diese Anordnung wird innerhalb des Gehäuses ein Verteilerstück benötigt, welches relativ geringe Abmessungen aufweist.

In einer weiteren Ausführung kann der Stromverteiler aus einem Kunststoff nach dem Spritzgussverfahren hergestellt werden. Auf bekannte Art und Weise erfolgt zunächst die elektrische Verdrahtung der einzelnen Kabel und Stecker, während anschließend diese Verdrahtung mit einem Kunststoff umspritzt wird und abschließend das endgültige Gehäuse des Stromverteilers entsteht.

Es ist im Gebrauch eines Möbels mit einem Möbelantrieb unvermeidbar, dass auf das Steuerkabel Zugkräfte ausgeübt werden. Dadurch würde der Stecker aus der Steckerbuchse des Stromverteilers herausgezogen. Um dieses zu verhindern, ist in weiterer Ausgestaltung vorgesehen, dass an dem Gehäuse des Stromverteilers zur Sicherung des Steckers des Steuerkabels in der in die Steckerbuchse eingesetzten Stellung ein Auszugssicherungselement schwenkbar gelagert ist. Dieses Auszugssicherungselement übergreift den Stecker zumindest teilweise. Damit die Funktion des Auszugssicherungselementes gewährleistet ist, ist vorgesehen, dass die Schwenkachse quer zu den Buchsen der Steckerbuchse verläuft, dass das Auszugssicherungselement halbschalenförmig ausgebildet ist und dass die Verbindung mit dem Stecker formschlüssig erfolgt. Dieser Formschluss wird erreicht, indem eine Wulst in eine entsprechend gestaltete Nut eingreift. In bevorzugter Ausführung ist vorgesehen, dass der Stecker eine Nut aufweist und dass die Innenfläche des halbschalenförmigen Auszugssicherungselementes eine entsprechend gestaltete Wulst aufweist.

Zur Festlegung des Stromverteilers am Gehäuse des Möbelantriebs ist vorgesehen, dass das Gehäuse an geeigneter Stelle Rastmittel in Form von Stegen, Haken, Taschen oder Schraubstellen in Form von Bohrungen, angedeuteten Bohrungen, Gewindezapfen, Gewindebohrungen und dergleichen aufweist, an denen der Stromverteiler oder weitere Bauteile festlegbar ist bzw. sind. Dazu weist der Stromverteiler entsprechende Gegenstücke auf, die mit den Verbindungsstellen des Gehäuses korrespondieren. Zweckmäßigerweise ist das Gehäuse des Möbelantriebs und das Gehäuse des Stromverteilers aus einem Kunststoff gefertigt, so dass die korrespondierenden Stellen einstückig an das jeweilige Gehäuse angeformt werden können. Denkbar wäre jedoch auch eine Befestigungsvariante, wobei unter Hinzunahme eines Hilfselementes der Stromverteiler an dem Gehäuse des Möbelantriebs festgelegt werden kann. Die Verbindung kann lösbar oder unlösbar gestaltet sein.

Die Anzahl und die Verbindungsart der an den Stromverteiler angeschlossenen Kabel richtet sich nach der Anzahl der angeschlossenen Geräte, wie Möbelantriebe, Motoren, sonstige Verbraucher, Steuer- und Bediengeräte. Als Steuer- und Bediengeräte kommen vorzugsweise Handschalter und Fußschalter in Frage, die steckbar mit dem Stromverteiler und deren Kontakte verbunden sein können. Andere Verbindungen, beispielsweise zu Verbrauchern wie Möbelantriebe oder zu Energieversorgern wie Trafos oder Gleichspannungsnetzteile, können feste Verbindungen aufweisen, so dass das jeweilige Kabel fest mit dem Stromverteiler verbunden ist. Dabei kann das andere, dem Stromverteiler abgewandte Ende des jeweiligen Kabels mit einem Stecker ausgestattet sein, um den Stromverteiler über das jeweilige Kabel mit dem jeweiligen Gerät steckbar zu verbinden.

Es besteht die Möglichkeit, alle Anschlüsse fest oder steckbar an dem Stromverteiler zu gestalten. Es ist deshalb vorgesehen, dass alle angeschlossenen Kabel fest mit dem Stromverteiler verbunden oder steckbar mit dem Stromverteiler verbindbar sind. Darüber hinaus besteht die Möglichkeit, dass bei bestimmten Anwendungsfällen alle Steckverbindungen abgedichtet werden. Es ist deshalb vorgesehen, dass zum Schutz gegen Eindringen von Feuchtigkeit oder Flüssigkeit jeder Steckerbuchse oder jedem Stecker ein einzelnes oder ein angeformtes elastisches Dichtelement zugeordnet ist, das mit dem Stecker der Steckerbuchse oder dem Gehäuse in Verbindung steht.

Anhand der beiliegenden Zeichnungen wird die Erfindung noch näher erläutert. Es zeigen:
- Figur 1: einen Stromverteiler der erfindungsgemäßen Möbelantriebseinheit in perspektivischer Darstellung ohne eingesetzten Stecker;
- Figur 2: eine der Figur 1 entsprechende Darstellung, jedoch mit eingesetztem Stecker, und
- Figur 3: eine den Figuren 1 und 2 entsprechende Darstellung mit dem Auszugssicherungselement in der Funktionsstellung.

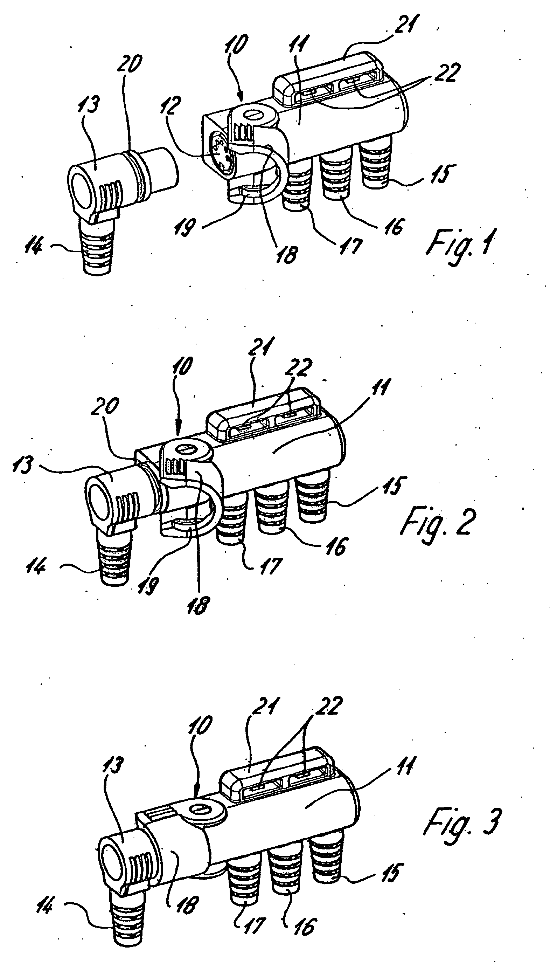

Der in den Figuren dargestellte Stromverteiler 10 enthält ein formstabiles, langgestrecktes Gehäuse 11, welches aus einem Kunststoff im Spritzgussverfahren hergestellt ist. An einer Stirnseite ist eine Steckerbuchse 12 fest eingesetzt, in die der Stecker 13 entsprechend den Figuren 2 und 3 eines zu einem nicht dargestellten Handschalter führenden Steuerkabels 14 eingesteckt ist. In das Innere des Gehäuses 11 führen ein Stromzuführkabel 15 und zwei Zuleitungskabel 16, 17. Das Stromzuführkabel 15 führt zu einer Spannungsquelle, beispielsweise zu einem Transformator. Die Zuleitungskabel 16, 17 führen entweder zu zwei Antriebsmotoren eines Doppelantriebes oder zu zwei Einzelantrieben. Das Stromzuführkabel 15 und die beiden Zuleitungskabel 16, 17 sind in nicht näher dargestellter Weise mit der Steckerbuchse 12 verbunden. Die Festlegung des Stromzuführkabels 15 und der Zuleitungskabel 16, 17 erfolgt durch Vergießen des Gehäuses 11 mit einer aushärtbaren Masse oder durch Umspritzen der Verdrahtung zwischen den Kabeln 15, 16, 17 und der Steckerbuchse 12. Es sind demzufolge keine weitere Befestigungselemente erforderlich.

An dem Gehäuse 11 ist ein halbschalenförmiges Auszugssicherungselement 18 schwenkbar gelagert, wobei die Schwenkachse quer zu den Buchsen der Steckerbuchse 12 verläuft. An der Innenfläche des Auszugssicherungselementes 18 ist eine Wulst 19 angeformt, die in der sichernden Stellung gemäß der Figur 3 in eine Nut 20 des Gehäuses des Steckers 13 eingreift.

Die zuvor beschriebene Auszugssicherung 18 ist schwenkbar mit dem Stromverteiler 10 verbunden. Entgegen dieser schwenkbaren Ausführung wäre auch eine steckbare Variante denkbar, so dass beispielsweise der Stecker 13 und der Stromverteiler 10 eine Nut oder eine solche Formgebung aufweisen, dass durch Hinzunahme eines steckbaren Auszugssicherungselementes 18 ein formschlüssiges Festlegen des Steckers 13 mit dem Stromverteiler 10 erfolgt.

Am Gehäuse 11 ist außerdem ein Bügel 21 angeformt, durch den zwei Taschen gebildet werden. In jeder Tasche ist ein Rastnocken 22 vorgesehen, so dass entsprechend gestaltete Zungen eines weiteren Gehäuses, beispielsweise eines Antriebsgehäuses, in die Taschen eingeschoben werden können, wobei durch die Rastnocken 22 eine Sicherung gegen Herausziehen oder Herausfallen geschaffen wird.

In nicht näher dargestellter Weise können im Gehäuse 11 oder am Gehäuse 11 des Verteilerblocks elektrische Bauteile, wie zum Beispiel eine Sicherung gegen Überstrom oder Überspannung, mit oder ohne Halte- und Verschlusselemente eingebracht oder angebracht werden, die in einem elektrischen Schaltkreis integriert sind. Dadurch wird eine besonders einfache Ausführung geschaffen. Ferner ist noch vorgesehen, dass die Anzahl der fest oder steckbar angeschlossenen Kabel 15, 16, 17 mindestens so hoch ist wie die mit dem jeweiligen Kabel 15, 16, 17 verbundenen Geräte, beispielsweise Verbraucher, Möbelantriebe, Handbedienungen, Stromversorgungen und dergleichen.

Die Erfindung ist nicht auf das dargestellte Ausführungsbeispiel beschränkt. Wesentlich ist, dass in konstruktiv einfacher Weise die Festlegung des Stromzuführkabels 15 sowie der Zuleitungskabel 16, 17 durch Vergießen oder durch Umspritzen mit einer aushärtbaren Masse erfolgt, vorzugsweise einem Kunststoff.

### Bezugzeichenliste

- 10: Stromverteiler
- 11: Gehäuse
- 12: Steckerbuchse
- 13: Stecker
- 14: Steuerkabel
- 15: Stromzuführkabel
- 16, 17: Zuleitungskabel
- 18: Auszugssicherungselement
- 19: Wulst
- 20: Nut
- 21: Bügel
- 22: Rastnocken

## Patentansprüche

1. Möbelantriebseinheit mit einem Möbelantrieb, einem Stromverteiler, einem Handschalter und mindestens einem Stromverbraucher, wobei an den Stromverteiler ein zu einer Spannungsquelle führendes Stromzuführkabel (15) und mindestens ein zu dem Stromverbraucher führendes Zuleitungskabel (16, 17) und ein zu dem Handschalter führendes Steuerkabel (14) angeschlossen sind, **dadurch gekennzeichnet, dass** der Stromverteiler (10) als Verteilerblock ausgebildet ist, und dass das Stromzuführkabel (15) und jedes Zuleitungskabel (16, 17) durch eine gegossene und/oder umspritzte sowie ausgehärtete Masse im Verteilerblock festgelegt sind, und dass der Stromverteiler (10) eine Steckerbuchse (12) aufweist, in die der Stecker (13) des Steuerkabels (14) einsteckbar ist.

2. Möbelantriebseinheit nach Anspruch 1, **dadurch gekennzeichnet, dass** das Stromzuführkabel (15) und jedes Zuleitungskabel (16, 17) in einer Reihe nebeneinander angeordnet sind.

3. Möbelantriebseinheit nach Anspruch 1 oder 2, **dadurch gekennzeichnet, dass** der Verteilerblock ein an der Seite des Stromzuführkabels (15) und der Zuleitungskabel (16, 17) offenes Gehäuse aufweist, dessen Innenraum mit der aushärtbaren Masse vergossen ist.

4. Möbelantriebseinheit nach einem oder mehreren der vorhergehenden Ansprüche 1 bis 3, **dadurch gekennzeichnet, dass** das Gehäuse (11) des Verteilerblocks im Spritzgussverfahren hergestellt ist, und dass die im Inneren des Gehäuses (11) miteinander elektrisch verbundenen Kabel (15, 16, 17) und Kontakte der Steckerbuchse (12) mit einem Kunststoff umspritzt sind.

5. Möbelantriebseinheit nach einem oder mehreren der vorhergehenden Ansprüche 1 bis 4, **dadurch gekennzeichnet, dass** die Steckerbuchse (12) im rechten Winkel zu dem Stromzuführkabel (15) und den Zuleitungskabeln (16, 17) steht.

6. Möbelantriebseinheit nach einem oder mehreren der vorhergehenden Ansprüche 1 bis 5, **dadurch gekennzeichnet, dass** an dem Gehäuse (11) zur Sicherung des in die Steckerbuchse (12) eingesteckten Steckers (13) ein Auszugssicherungselement (18) schwenkbar gelagert ist.

7. Möbelantriebseinheit nach Anspruch 6, **dadurch gekennzeichnet, dass** das Auszugssicherungselement (18) steckbar mit dem Gehäuse (11) und dem Stecker (13) verbindbar ist, und dass das steckbare Auszugssicherungselement (18) formschlüssig den Stecker (13) mit dem Gehäuse (11) verbindet.

8. Möbelantriebseinheit nach Anspruch 6 oder 7, **dadurch gekennzeichnet, dass** die Schwenkachse des Auszugssicherungselementes (18) quer zu den Buchsen der Steckerbuchse (12) verläuft, und dass das Auszugssicherungselement (18) halbschalenförmig ausgebildet ist und dass die Sicherung des Steckers (13) formschlüssig erfolgt.

9. Möbelantriebseinheit nach Anspruch 8, **dadurch gekennzeichnet, dass** an der Innenseite des halbschalenförmigen Auszugssicherungselementes (18) eine in radialer Richtung verlaufende Wulst (19) angeformt ist, die in der sichernden Stellung in eine Nut (20) des Steckers (13) eingreift.

10. Möbelantriebseinheit nach einem oder mehreren der vorhergehenden Ansprüche 1 bis 9, **dadurch gekennzeichnet, dass** außenseitig am Gehäuse (11) eines Möbelantriebes funktionsgerecht Rastmittel in Form von Stegen, Haken, Taschen oder Schraubstellen in Form von Bohrungen, angedeuteten Bohrungen, Gewindezapfen, Gewindebohrungen und dergleichen vorgesehen sind, an denen der Stromverteiler (10) oder weitere Bauteile festlegbar ist bzw. sind.

11. Möbelantriebseinheit nach Anspruch 10, **dadurch gekennzeichnet, dass** innerhalb jeder Tasche zur Festlegung eines weiteren Gehäuses wenigstens ein Rastnocken (22) angeordnet ist.

12. Möbelantriebseinheit nach einem oder mehreren der vorhergehenden Ansprüche 1 bis 11, **dadurch gekennzeichnet, dass** im oder am Gehäuse (11) des Verteilerblocks elektrische Bauteile, wie zum Beispiel eine Sicherung gegen Überstrom oder Überspannung mit oder ohne Halte- und Verschlusselemente einbringbar oder anbringbar sind, die in einem elektrischen Schaltkreis integriert sind.

13. Möbelantriebseinheit nach einem oder mehreren der vorhergehenden Ansprüche 1 bis 12, **dadurch gekennzeichnet, dass** die Anzahl der fest oder steckbar angegossenen Kabel (15, 16, 17) mindestens so hoch ist, wie die mit dem jeweiligen Kabel (15, 16, 17) verbundenen Geräte wie zum Beispiel Verbraucher, Möbelantriebe, Handbedienungen, Stromversorgungen und dergleichen.

14. Möbelantriebseinheit nach einem oder mehreren der vorhergehenden Ansprüche 1 bis 13, **dadurch gekennzeichnet, dass** alle angeschlossenen Kabel (14, 15, 16, 17) des Stromverteilers (10) fest mit dem Stromverteiler (10) verbunden oder steckbar mit dem Stromverteiler (10) verbindbar sind.

15. Möbelantriebseinheit nach einem oder mehreren der vorhergehenden Ansprüche 1 bis 14, **dadurch gekennzeichnet, dass** jeder Steckerbuchse (12) oder jedem Stecker (13) ein einzelnes oder ein angeformtes elastisches Dichtelement zugeordnet ist, das mit dem Stecker (13), der Steckerbuchse (12) oder dem Gehäuse (11) in Verbindung bringbar ist.

## Claims

1. Furniture drive unit having a furniture drive, a current distributor, a manual switch and at least one current consumer, with a current supply cable (15), which leads to a voltage source, and at least one feed cable (16, 17), which leads to the current consumer, and a control cable (14), which leads to the manual switch, being connected to the current distributor, **characterized in that** the current distributor (10) is in the form of a distributor block, and **in that** the current supply cable (15) and each feed cable (16, 17) are fixed in the distributor block by a cast and/or extrusion-coated and cured composition, and **in that** the current distributor (10) has a plug socket (12) in which the plug (13) of the control cable (14) can be inserted.

2. Furniture drive unit according to Claim 1, **characterized in that** the current supply cable (15) and each feed cable (16, 17) are arranged next to one another in a row.

3. Furniture drive unit according to Claim 1 or 2, **characterized in that** the distributor block has a housing which is open on the side of the current supply cable (15) and the feed cables (16, 17) and whose interior is cast with the curable composition.

4. Furniture drive unit according to one or more of the preceding Claims 1 to 3, **characterized in that** the housing (11) of the distributor block is produced using an injection-moulding process, and **in that** the cables (15, 16, 17), which are electrically connected to one another in the interior of the housing (11), and contacts of the plug socket (12) are extrusion-coated with a plastic.

5. Furniture drive unit according to one or more of the preceding Claims 1 to 4, **characterized in that** the plug socket (12) is at a right angle to the current supply cable (15) and the feed cables (16, 17).

6. Furniture drive unit according to one or more of the preceding Claims 1 to 5, **characterized in that** a withdrawal-prevention element (18) is pivotably mounted on the housing (11) in order to lock the plug (13) which is plugged into the plug socket (12).

7. Furniture drive unit according to Claim 6, **characterized in that** the withdrawal-prevention element (18) can be connected to the housing (11) and the plug (13) in a pluggable manner, and **in that** the pluggable withdrawal-prevention element (18) connects the plug (13) to the housing (11) in an interlocking manner.

8. Furniture drive unit according to Claim 6 or 7, **characterized in that** the pivot axis of the withdrawal-prevention element (18) runs transverse to the bushings of the plug socket (12), and **in that** the withdrawal-prevention element (18) is in the form of a half-shell, and **in that** the plug (13) is locked in an interlocking manner.

9. Furniture drive unit according to Claim 8, **characterized in that** a bead (19), which runs in the radial direction and engages in a groove (20) in the plug (13) in the locking position, is integrally formed on the inside of the half-shell-like withdrawal-prevention element (18).

10. Furniture drive unit according to one or more of the preceding Claims 1 to 9, **characterized in that** suitable latching means in the form of crosspieces, hooks, pockets or screw points in the form of bores, implied bores, threaded pins, threaded bores and the like, to which the current distributor (10) or further components can be fixed, are provided on the outside of the housing (11) of a furniture drive.

11. Furniture drive unit according to Claim 10, **characterized in that** at least one latching cam (22) is arranged within each pocket for the purpose of fixing a further housing.

12. Furniture drive unit according to one or more of the preceding Claims 1 to 11, **characterized in that** electrical components, for example a fuse for preventing overcurrent or overvoltage, with or without holding and closure elements and which are integrated in an electrical circuit can be inserted into or mounted on the housing (11) of the distributor block.

13. Furniture drive unit according to one or more of the preceding Claims 1 to 12, **characterized in that** the number of cables (15, 16, 17) which are permanently or pluggably integrally cast is at least as high as the number of devices, for example consumers, furniture drives, manual operator controllers, current supplies and the like, connected to the respective cable (15, 16, 17).

14. Furniture drive unit according to one or more of the preceding Claims 1 to 13, **characterized in that** all the connected cables (14, 15, 16, 17) of the current distributor (10) are permanently connected to the current distributor (10) or can be pluggably connected to the current distributor (10).

15. Furniture drive unit according to one or more of the preceding Claims 1 to 14, **characterized in that** each plug socket (12) or each plug (13) has an associated individual or integrally formed elastic sealing element which can be connected to the plug (13), the plug socket (12) or the housing (11).

## Revendications

1. Unité d'entraînement de meuble comportant un système d'entraînement, un distributeur de courant, un interrupteur manuel et au moins un consommateur de courant, sachant qu'un câble d'admission de courant (15), menant vers une source de courant, et au moins un câble d'acheminement (16, 17), menant vers le consommateur de courant, et un câble de commande (14), menant vers l'interrupteur manuel, sont raccordés au distributeur de courant, **caractérisée en ce que** le distributeur de courant (10) est réalisé sous forme de bloc de distribution et **en ce que** le câble d'admission de courant (15) et chaque câble d'acheminement (16, 17) sont fixés dans le bloc de distribution par une matière coulée et/ou surmoulée et durcie, et **en ce que** le distributeur de courant (10) comporte une prise de courant femelle (12) dans laquelle peut être enfiché le connecteur mâle (13) du câble de commande (14).

2. Unité d'entraînement de meuble selon la revendication 1, **caractérisée en ce que** le câble d'admission de courant (15) et chaque câble d'acheminement (16, 17) sont disposés en une rangée les uns à côté des autres.

3. Unité d'entraînement de meuble selon la revendication 1 ou 2, **caractérisée en ce que** le bloc de distribution comporte un boîtier, qui est ouvert sur le côté du câble d'admission de courant (15) et des câbles d'acheminement (16, 17) et dont l'intérieur est comblé par une matière durcie.

4. Unité d'entraînement de meuble selon une ou plusieurs des revendications précédentes 1 à 3, **caractérisée en ce que** le boîtier (11) du bloc de distribution est réalisé par un procédé de moulage par injection, et **en ce que** les câbles (15, 16, 17) et des contacts de la prise de courant femelle (12), reliés électriquement entre eux à l'intérieur du boîtier (11), sont enrobés par un surmoulage de matière plastique.

5. Unité d'entraînement de meuble selon une ou plusieurs des revendications précédentes 1 à 4, **caractérisée en ce que** la prise de courant femelle (12) est située à angle droit par rapport au câble d'admission de courant (15) et aux câbles d'acheminement (16, 17).

6. Unité d'entraînement de meuble selon une ou plusieurs des revendications précédentes 1 à 5, **caractérisée en ce qu'**un élément d'immobilisation détachable (18) est monté pivotant sur le boîtier (11) en vue d'immobiliser le connecteur mâle (13) enfiché dans la prise de courant femelle (12).

7. Unité d'entraînement de meuble selon la revendication 6, **caractérisée en ce que** l'élément d'immobilisation détachable (18) peut être assemblé par enfichage avec le boîtier (11) et le connecteur mâle (13), et **en ce que** l'élément d'immobilisation détachable (18) assemble le connecteur mâle (13) par conjugaison de forme avec le boîtier (11).

8. Unité d'entraînement de meuble selon la revendication 6 ou 7, **caractérisée en ce que** l'axe de pivotement de l'élément d'immobilisation détachable (18) est orienté transversalement aux trous d'enfichage de la prise de courant femelle (12), et **en ce que** l'élément d'immobilisation détachable (18) est réalisé en forme de demi-coque et **en ce que** le connecteur mâle (13) est immobilisé par conjugaison de forme.

9. Unité d'entraînement de meuble selon la revendication 8, **caractérisée en ce que** sur la face intérieure de l'élément d'immobilisation détachable (18) en forme de demi-coque est formé un bourrelet (19), qui est orienté dans la direction radiale et qui, dans la position d'immobilisation, s'engage dans une rainure (20) du connecteur mâle (13).

10. Unité d'entraînement de meuble selon une ou plusieurs des revendications précédentes 1 à 9, **caractérisée en ce que**, sur la face extérieure du boîtier (11) d'un système d'entraînement de meuble, sont prévus des moyens de blocage, adaptés à leur fonction, sous forme de nervures, crochets, poches ou parties filetées en forme de forures, forures ébauchées, téton fileté, forures taraudées et tout élément similaire, sur lesquels peuvent être fixés ou sont fixés le distributeur de courant (10) ou d'autres composants.

11. Unité d'entraînement de meuble selon la revendication 10, **caractérisée en ce qu'**à l'intérieur de chaque poche, destinée à la fixation d'un autre boîtier, est disposé au moins un ergot de blocage (22).

12. Unité d'entraînement de meuble selon une ou plusieurs des revendications précédentes 1 à 11, **caractérisée en ce que** dans ou sur le boîtier (11) du bloc de distribution peuvent être insérés ou montés des composants électriques, tels qu'un fusible de sécurité contre une surintensité de courant ou une surtension avec ou sans éléments de fixation et d'assemblage, qui sont intégrés dans un circuit de commande électrique.

13. Unité d'entraînement de meuble selon une ou plusieurs des revendications précédentes 1 à 12, **caractérisée en ce que** le nombre de câbles (15, 16, 17) assemblés de manière fixe par moulage ou assemblés par enfichage est au moins égal au nombre de composants à relier à chacun des câbles (15, 16, 17), tels que des consommateurs, des systèmes d'entraînement de meuble, des commandes manuelles, des alimentations de courant et tout élément similaire.

14. Unité d'entraînement de meuble selon une ou plusieurs des revendications précédentes 1 à 13, **caractérisée en ce que** tous les câbles (14, 15, 16, 17) raccordés du distributeur de courant (10) sont reliés de manière fixe au distributeur de courant (10) ou peuvent être assemblés par enfichage avec le distributeur de courant (10).

15. Unité d'entraînement de meuble selon une ou plusieurs des revendications précédentes 1 à 14, **caractérisée en ce qu'**à chaque prise de courant femelle (12) ou à chaque connecteur mâle (13) est associé un élément d'étanchéité élastique formé sur ceux-ci ou séparé, lequel peut être relié au connecteur mâle (13), à la prise de courant femelle (12) ou au boîtier (11).
